# EUROPEAN PATENT SPECIFICATION

(11) **EP 3 016 890 B1**
(45) Date of publication and mention of the grant of the patent: **29.03.2017**
(21) Application number: 14809983.1
(22) Date of filing: 31.10.2014
(51) Int. Cl.: B65D 85/804

(54) **CAPSULE FOR MAKING BEVERAGES**
KAPSEL ZUR ZUBEREITUNG VON GETRÄNKEN
CAPSULE POUR LA PRÉPARATION DE BOISSONS

(30) Priority: 17.12.2013 IT VR20130285
(43) Date of publication of application: 11.05.2016
(73) Proprietor: Caffitaly System S.P.A., 40041 Gaggio Montano (BO) (IT)
(72) Inventor: ACCURSI, Giovanni, I-40046 Bologna (IT)
(74) Representative: Ponchiroli, Simone
(86) International application number: PCT/IB2014/065739
(87) International publication number: WO 2015/092563

(56) References cited:
- EP-A1- 2 287 090
- EP-A1- 2 476 633
- WO-A1-2013/076519
- WO-A1-2013/136210
- US-A1- 2010 180 775
- US-A1- 2011 045 144

## Description

This invention relates to a capsule for making beverages, in particular a capsule comprising inside it a powdered food substance which allows a beverage to be made by passing hot water through it.

In particular, this invention may be applied both in the case in which the capsule contains substances intended to allow the beverage to be made after they have been practically completely dissolved in the hot water, and in the case in which the capsule contains powdered food substances intended to allow the beverage to be made by extraction (such as coffee powder).

In more detail, this invention relates to the definition of a new capsule which can advantageously be used in the coffee machines of a system currently widespread on the market whose capsules are currently constituted of a cup-shaped aluminium body, closed at the top by a sheet of aluminium which is less resistant. The coffee machines used in said system comprise a first part and a second part which are mobile one relative to the other between an operating position and a home position. The first part forms a housing in which a capsule can be inserted, the inside of the housing being equipped with piercing elements which in use pierce a bottom portion of the cup-shaped body of the capsule. In the operating position, the first part and the second part clamp the capsule in the housing, creating a watertight seal outside the capsule. In this way, when pressurised hot water is fed into the housing, it penetrates the capsule through the holes made by the piercing element, and causes an increase in the internal pressure which makes the upper closing sheet swell, said upper closing sheet then being torn against piercing means which are fixed to the second part. At that point the beverage can come out of the capsule and be made to flow to the outside of the machine through suitable ducts.

It should be noticed that capsules which are alternatives to those made completely of aluminium are already on sale. They are usually capsules completely or at least mainly made of plastic material. In particular, all of the prior art capsules of this type have at least the tubular lateral wall and the upper flange made of plastic material. Some also have the bottom portion made completely of plastic material (which may be pre-pierced), whilst in others the bottom portion has an annular zone made of plastic material which delimits at the centre an opening that is closed by a flat sheet of aluminium. Such capsules are for instance described in US 2010/0180775 A1 and US 2011/0180775 A1.

However, all of the capsules which are alternatives to those made of aluminium, known on the market, are not without disadvantages.

In particular, the Applicant has been able to ascertain that at least with some types of known machines, the alternative capsules made at least mainly of plastic may reveal problems during the beverage supplying step. With some machines in particular of the latest generation, it was in fact found that in many cases the piercing elements either do not succeed in piercing the bottom of the capsule or they pierce it insufficiently.

The most common solution to this type of problem is to make capsules which are pre-pierced. However, that solution has the disadvantage that the capsules are no longer able by themselves to guarantee correct preservation of the powdered substance contained in them and they must therefore be packaged inside an additional wrapper which is impermeable to oxygen.

In this context, the technical purpose which forms the basis of this invention is to provide a capsule for making beverages which overcomes the above-mentioned disadvantages.

In particular, the technical purpose of this invention is to provide a capsule for making beverages which is an alternative to the prior art capsules, which can be made in such a way that it is both impermeable to oxygen and it guarantees optimum piercing by the piercing elements of the extraction device of any type of known machine.

The technical purpose specified and the aims indicated are substantially achieved by a capsule for making beverages as described in the appended claims.

Further features and the advantages of this invention are more apparent in the detailed description below, with reference to several preferred, nonlimiting embodiments of a capsule for making beverages, illustrated in the accompanying drawings, in which:
- Figure 1 is an axonometric view of a capsule made in accordance with a first embodiment of this invention, in cross-section along a vertical central plane;
- Figure 2 is a front view of a containment body of the capsule of Figure 1;
- Figure 3 is an axonometric view of a capsule made in accordance with a second embodiment of this invention, in cross-section along a vertical central plane;
- Figure 4 is a front view of a containment body of the capsule of Figure 3;
- Figure 5 is an axial section of the capsule of Figure 4 partly inserted in a device according to this invention, with the device in a non-operating configuration; and
- Figure 6 is a schematic view of both the capsule and the device of Figure 5, with the device in an operating configuration.

With reference to the accompanying drawings, the numeral 1 denotes in its entirety a capsule for making beverages in accordance with this invention. Similarly to the prior art capsules, the capsule according to this invention also contains a powdered food substance (not illustrated in the accompanying drawings) which allows a beverage to be made by passing hot water through it. Depending on requirements, the powdered food substance may be a substance which is soluble in water, therefore intended to come out of the capsule 1 together with the preparation water, or it may be a substance designed to allow the beverage to be made by extraction (such as coffee powder).

The capsule 1 comprises a cup-shaped containment body 2 closed at the top by a closing element 3. Advantageously, the containment body 2, the closing element 3 and their connection to one another (usually achieved by sealing or gluing) are made in such a way as to guarantee that the capsule 1 is hermetically sealed at least regarding the passage of oxygen, so as to be able to guarantee improved preservation of the powdered food substance. However, this invention also covers any capsules which are not oxygenproof, irrespective of whether or not they are in turn packaged in protective wrappers which may be able to guarantee that they are oxygenproof.

The containment body 2 forms inside it a containment chamber 4 which contains the powdered food substance, and comprises a tubular lateral wall 5 and a bottom portion 6 which closes the chamber 4 on the opposite side to the closing element 3. The tubular lateral wall 5 extends between a first edge 7 which is connected to the bottom portion 6 and a second edge 8 to which the closing element 3 is connected, and it has a central axis of extension (not shown in the accompanying drawings). Moreover, advantageously, the tubular lateral wall 5, and the containment body 2 as a whole, roughly have a frustoconical shape or in any case a shape converging from the second edge 8 towards the bottom portion 6. The bottom portion 6 in contrast extends at least partly transversally to the central axis of the tubular lateral wall 5, to close it.

According to the main innovative aspect of this invention, the bottom portion 6 comprises a first shaped sheet, and is preferably entirely constituted of it.

The first shaped sheet, in particular, is bowl-shaped and the bottom portion 6 comprises a central zone 9 extending transversally to the central axis (and which in the embodiment illustrated is constituted of a concave lower wall and a frustoconical intermediate wall) and a connecting wall 10 which is perimetrically connected to the central zone 9, connected to the tubular lateral wall 5 at the first edge 7, and which comprises at least one component of extension parallel with the central axis (it should be noticed that in other embodiments the central zone and connecting wall may be constituted of a single profile, for example a spherical cap). In this way, along the direction defined by the central axis, the central zone 9 is at a distance from the first edge 7 and from the tubular lateral wall 5 as a whole (in other words, the projection of the central zone 9 on the central axis is at a distance from the projection on the central axis of the first edge 7 and of the entire tubular lateral wall 5).

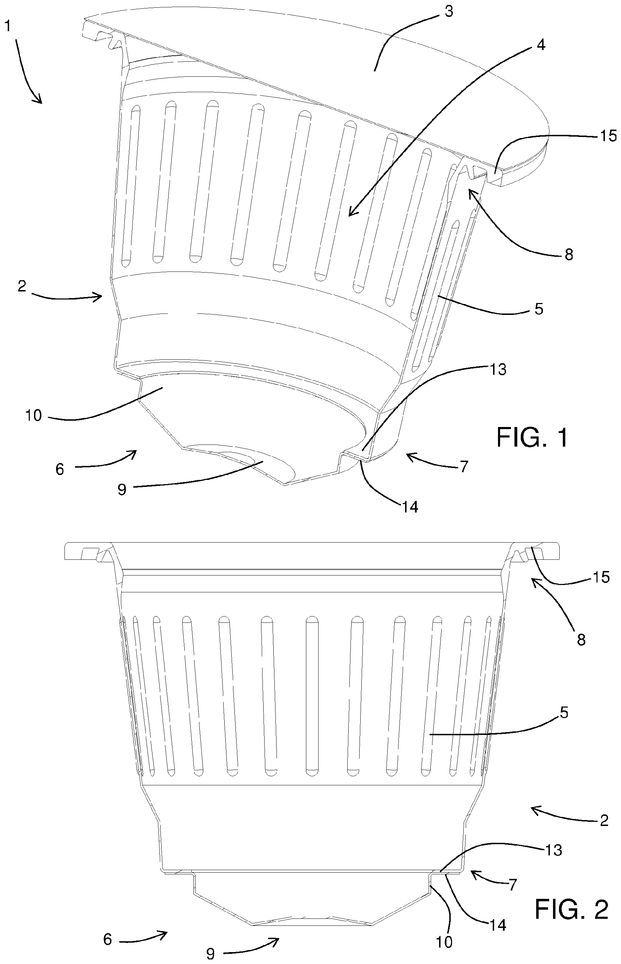

Furthermore, the first sheet is made of a first material having a resistance to piercing and tearing which is less than that of a second material constituting the tubular lateral wall 5. In the preferred embodiment, in particular, the first sheet comprises at least one layer which is made at least mainly of aluminium, whilst the second sheet comprises at least one layer of plastic material, such as polypropylene or polyethylene. Moreover, advantageously, both the first sheet and the second sheet are made in such a way that they are substantially impermeable to oxygen. In the case of the first sheet, that result may be achieved with a suitable thickness of the layer of aluminium. In contrast, in the case of the second sheet, that result may be achieved by also including in the second sheet at least a second layer of a suitable material such as EVOH. However, the first sheet also advantageously comprises a further layer of polymeric material applied on the layer of aluminium on the side facing towards the powdered substance to prevent direct contact between said substance and the aluminium. Said layer of polymeric material may also be used as an "adhesive" during the step of fixing the first sheet to the tubular lateral wall 5 in the case of the embodiment in Figure 1.

Moreover, in the preferred embodiment, the first shaped sheet is drawn, whilst the tubular lateral wall 5 is made by moulding or thermoforming. Finally, the closing element 3 may advantageously be made of the first material or of a similar material, or of a thin plastic film.

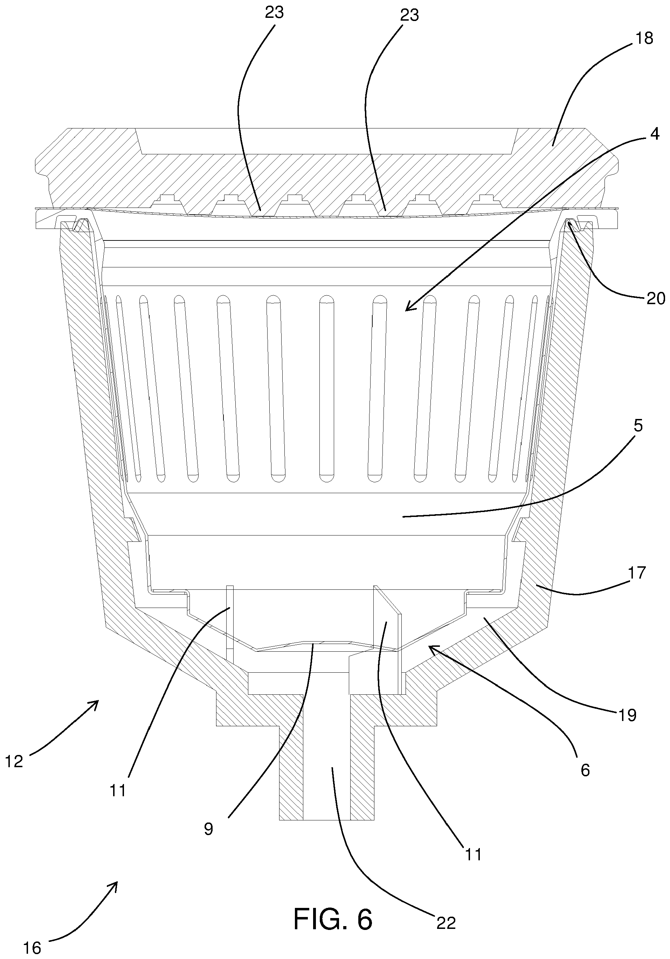

Preferably, the bottom portion 6 and the tubular lateral wall 5 are sized and/or shaped in such a way that, in use, one or more piercing elements 11 of a beverage-making device 12 in which the capsule 1 is intended to be used pierce the bottom portion 6 without damaging the tubular lateral wall 5 (Figure 6).

The tubular lateral wall 5, at the first edge 7, advantageously comprises a first radial flange 13 extending transversally to the direction defined by the central axis, preferably towards the central axis. In turn, the connecting wall 10 advantageously comprises a second radial flange 14 coupled to the first radial flange 13, and which preferably extends outwards relative to the central axis.

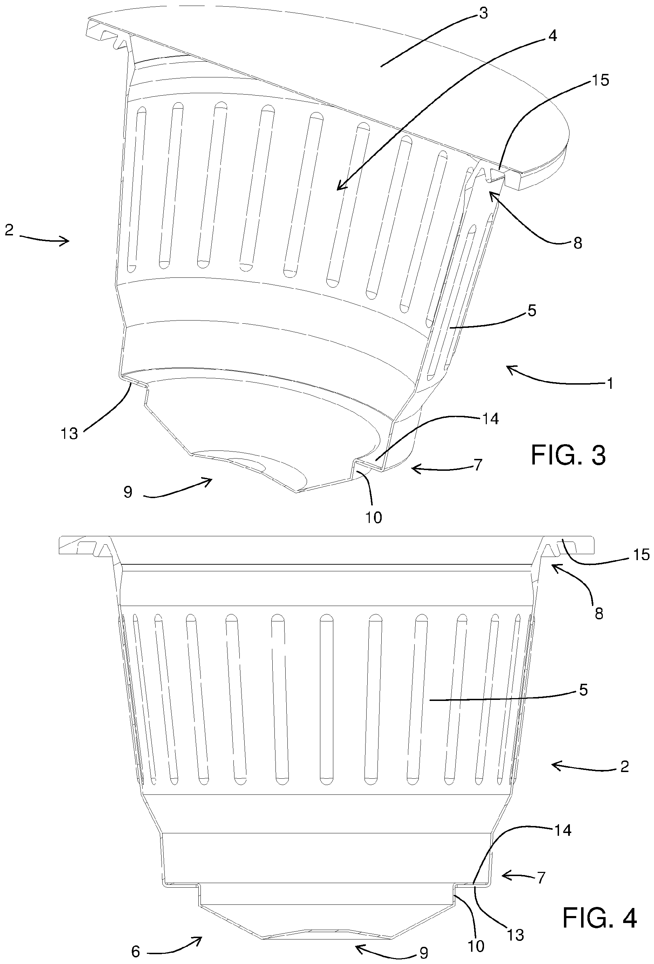

As shown in the accompanying drawings, coupling between the first flange 13 and the second flange 14 may be achieved either at the outer surface of the tubular lateral wall 5 (Figures 1 and 2), or at the inner surface of the tubular lateral wall 5 (Figures 3 and 4).

Similarly to other prior art capsules, at the second edge 8 the tubular lateral wall 5 comprises a third radial flange 15, to which the closing element 3 is fixed, and which extends transversally to the direction defined by the central axis, preferably away from the central axis.

Finally, it should be noticed that according to this invention it is also possible that, inside the capsule 1, there is one or more filtering elements (not illustrated) for separating for example the powdered food substance from the central zone 9 or from the closing element 3.

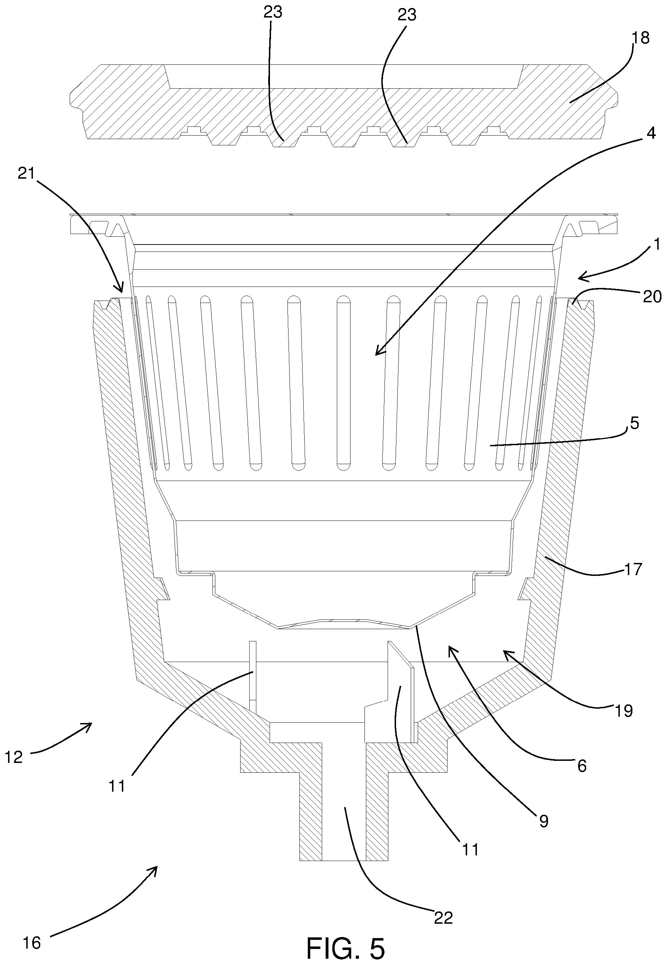

Figures 5 and 6 show as a whole and schematically a system 16 for making beverages comprising both a capsule 1 made according to what is described above, and an extraction device 12 in which the capsule 1 can be inserted and which in turn can be mounted in any machine for making beverages.

The device 12 in turn comprises a first part 17 and a second part 18 which are mobile one relative to the other between an operating position and a home position.

The first part 17 comprises a housing 19 for the capsule 1 in which the capsule 1 can be inserted at least for most of its volume. In the embodiment illustrated, in particular, the entire capsule 1 with the exception of the third flange 15 can be inserted in the housing 19. In contrast, the third flange 15 rests on a perimetric edge 20 which delimits an insertion opening 21 through which the capsule 1 is inserted in the housing 19.

The second part 18 forms a sort of lid and can be coupled to the first part 17 to close the housing 19, and in use to clamp between itself and the perimetric edge 20 the third flange 15 of the capsule 1.

In fact, in the operating position, the first part 17 and the second part 18 clamp between them the capsule 1 inserted in the housing 19, whilst in the home position they allow the insertion and removal of the capsule 1 respectively in and from the housing 19. Associated with the third flange 15, the second part 18 and/or the perimetric edge 20, in the known way, there may be watertight sealing means designed to prevent the passage of liquid at the zone where the third flange 15 is clamped between the first part and the second part 18 in the operating position.

One or more piercing elements 11 are associated with the housing 19 for piercing the bottom portion 6 of a capsule 1, at least when the first part 17 and the second part 18 are in the operating position. In the preferred embodiment the piercing elements 11 are three metal blades (not necessarily sharp) which are fixed to the first part 17.

Water feeding means are operatively associated with the housing 19 for in use supplying water into the capsule 1, through the bottom portion 6 pierced by the one or more piercing elements 11. For that purpose, in the preferred embodiment the feeding means comprise a first duct 22 for the water which leads into the housing 19 at the piercing elements 11.

There are also piercing means designed to pierce the closing element 3 at least when the capsule 1 is inserted in the housing 19, the first part 17 and the second part 18 are in the operating position and the pressure in the chamber 4 exceeds a predetermined value. In the embodiment illustrated, the piercing means comprise a plurality of raised elements 23 fixed to the second part 18, against which the closing element 3 can tear when the pressure inside the capsule 1 increases to a predetermined value following the supplying of pressurised hot water into the chamber 4.

Associated with the piercing means there are beverage supplying means which allow the flow of the beverage, which comes out through the closing element 3, to the outside of the device 12 (in the embodiment illustrated the beverage supplying means comprise a second duct not illustrated which passes through the second part 18).

According to this invention, when the capsule 1 is inserted in the housing 19, and the first part 17 and the second part 18 are in the operating position, the one or more piercing elements 11 pass through the bottom portion 6 without damaging the tubular lateral wall 5.

Regarding production of the capsule 1 according to this invention, the preferred method generally comprises the operating steps of creating the bottom portion 6, creating the tubular lateral wall 5, connecting them to one another to create the containment body 2, inserting the powdered food substance in the chamber 4 and closing the top of the containment body 2 with the closing element 3.

In more detail, regarding creation of the above-mentioned bottom portion 6, the method comprises shaping the first material into a bowl shape, preferably by drawing a first sheet which comprises at least one layer made at least mainly of aluminium.

In contrast, the tubular lateral wall 5 is made using the second material, which has a greater resistance to piercing and tearing than that of the first material. In the preferred embodiment, the second material comprises at least one layer of plastic material and the tubular lateral wall 5 is made by moulding or thermoforming.

As already indicated, the method then comprises making the containment body 2 which is open at the top and which inside it forms the containment chamber 4. Advantageously, that is achieved by fixing a free edge of the connecting wall 10 to the first edge 7 of the tubular lateral wall 5.

However, for this purpose it should be noticed that the steps of creating the bottom portion 6 and fixing the bottom portion 6 to the tubular lateral wall 5 may be carried out in any order. In fact, it is both possible to shape the first sheet before fixing it to the tubular lateral wall 5, and to first fix the unshaped first sheet to the first edge 7 and then shape it.

Finally, it should be noticed that once the containment body 2 has been created, it is also possible to insert in it, before and/or after the powdered substance, said filtering elements, if present.

During use of the capsule 1 in the related device 12 for making beverages, with the first part 17 and the second part 18 in the home position, the capsule 1 is inserted in the housing 19 and the bottom portion 6 rests on the piercing elements 11. The subsequent movement of the first part 17 and the second part 18 to the operating position causes on one hand sealed clamping of the third flange 15 between the perimetric edge 20 and the second part 18, and on the other hand tearing of the bottom portion 6 against the piercing elements 11 (Figure 6).

Once the first part 17 and the second part 18 are in the operating position, the feeding means begin supplying hot water into the housing 19 and from the housing into the chamber 4 through the holes made by the piercing elements 11. The increase in the internal pressure then causes the closing element 3 to swell and be torn against the raised elements 23, allowing the beverage to be supplied.

This invention brings important advantages.

In particular, thanks to this invention it was possible to develop an alternative capsule to the prior art capsules, which, although it is not made entirely of aluminium, can be made in such a way that it is both impermeable to oxygen and able to always guarantee optimum piercing of the bottom portion by the piercing elements of the extraction device, with any type of supplying device of this type currently on the market. That result was achieved thanks to the fact that the zone for fixing the bottom portion to the tubular lateral wall has been axially distanced from the central zone. Finally, it should be noticed that this invention is relatively easy to produce and that even the cost linked to implementing the invention is not very high. The invention described above may be modified and adapted in several ways without thereby departing from the scope of the inventive concept. Moreover, all details of the invention may be substituted with other technically equivalent elements and the materials used, as well as the shapes and dimensions of the various components, may vary according to requirements.

## Claims

1. A capsule for making beverages, containing a powdered food substance which allows a beverage to be made by passing hot water through it, the capsule (1) comprising:
a cup-shaped containment body (2) in turn comprising a tubular lateral wall (5) extending between a first edge (7) and a second edge (8) and a bottom portion (6) fixed to the first edge (7) and extending transversally to a central axis of the tubular lateral wall (5), the containment body (2) forming inside it a containment chamber (4) which contains the powdered food substance; and
a closing element (3) fixed to the second edge (8) for closing the containment body (2);
**characterised in that** the bottom portion (6) comprises a bowl-shaped first sheet made of a first material having a resistance to piercing and tearing which is less than that of a second material constituting the tubular lateral wall (5).

2. The capsule according to claim 1, **characterised in that** the bottom portion (6) comprises a central zone (9) extending transversally to the central axis and a connecting wall (10) which is connected to the central zone (9) and which comprises at least one component of extension parallel with the central axis, the connecting wall (10) being connected to the tubular lateral wall (5) at the first edge (7).

3. The capsule according to claim 1 or 2, **characterised in that** the first sheet comprises at least one layer made at least mainly of aluminium.

4. The capsule according to claim 1, 2 or 3, **characterised in that** the tubular lateral wall (5), at the first edge (7), comprises a first radial flange (13) extending transversally to a direction defined by the central axis and **in that** the connecting wall (10) comprises a second radial flange (14) coupled to the first radial flange (13).

5. The capsule according to claim 4, **characterised in that** the first flange (13) extends towards the central axis.

6. The capsule according to any one of the preceding claims, **characterised in that** the tubular lateral wall (5), at the second edge (8) comprises a third radial flange (15) extending transversally to a direction defined by the central axis and **in that** the closing element (3) is fixed to the third flange (15).

7. The capsule according to any one of the preceding claims, **characterised in that** the first shaped sheet is drawn.

8. The capsule according to any one of the preceding claims, **characterised in that** the bottom portion (6) and the tubular lateral wall (5) are sized and/or shaped in such a way that, in use, one or more piercing elements (11) of a beverage-making device (12) in which the capsule (1) is intended to be used pierce the bottom portion (6) without damaging the tubular lateral wall (5).

9. A system for making beverages comprising a capsule (1) made according to any one of the preceding claims, and at least one extraction device (12) which in turn comprises:
a first part (17) comprising a housing (19) for the capsule (1), and a second part (18), the first part (17) and the second part (18) being mobile one relative to the other between an operating position in which they clamp between them a capsule (1) inserted in the housing (19), and a home position in which they allow the insertion and removal of the capsule (1) respectively in and from the housing (19);
one or more piercing elements (11) associated with the housing (19) for piercing the bottom portion (6) of a capsule (1) inserted in the housing (19) at least when the first part (17) and the second part (18) are in the operating position;
water feeding means operatively associated with the housing (19) for in use supplying water into the capsule (1) through the bottom portion (6) pierced by the one or more piercing elements (11);
piercing means designed to pierce the closing element (3) at least when the capsule (1) is inserted in the housing (19), the first part (17) and the second part (18) are in the operating position and the pressure in the chamber (4) exceeds a predetermined value;
wherein, moreover, when the capsule (1) is inserted in the housing (19) and the first part (17) and the second part (18) are in the operating position, the one or more piercing elements (11) pass through the bottom portion (6) without damaging the tubular lateral wall (5).

10. A method for making a capsule for making beverages, containing a powdered food substance which allows a beverage to be made by passing hot water through it, comprising the operating steps of:
shaping a first material into a bowl shape to form a bottom portion (6) comprising a central zone (9) and a connecting wall (10) perimetrically connected to the central zone (9) and extending away from the central zone (9);
using a second material, which has a greater resistance to piercing and tearing than that of the first material, to make a tubular lateral wall (5) extending between a first edge (7) and a second edge (8) and having a central axis;
making a containment body (2) which is open at the top and which inside it forms a containment chamber (4), fixing a free edge of the connecting wall (10) to the first edge (7);
inserting in the containment chamber (4) a predetermined quantity of the powdered food substance; and
closing the chamber (4) by fixing a closing element (3) to the second edge (8).

11. The method according to claim 10, wherein the first material comprises at least one layer of aluminium and/or wherein the second material comprises at least one layer of plastic material.

12. The method according to claim 10 or 11, wherein the bottom portion (6) is made by drawing the first sheet.

## Patentansprüche

1. Kapsel zur Zubereitung von Getränken, enthaltend eine pulverförmige Lebensmittelsubstanz, welche die Zubereitung eines Getränkes durch das Durchlaufen von heissem Wasser durch diese erlaubt, wobei die Kapsel (1) wie folgt enthält:
- einen becherförmigen Aufnahmekörper (2), wiederum enthaltend eine rohrförmige Seitenwand (5), die sich zwischen einem ersten Rand (7) und einem zweiten Rand (8) erstreckt, und einen Bodenabschnitt (6), befestigt an dem ersten Rand (7) und sich quer zu einer mittleren Achse der rohrförmigen Seitenwand (5) erstreckend, wobei der Aufnahmekörper (2) in seinem Inneren eine Aufnahmekammer (4) bildet, welche die pulverförmige Lebensmittelsubstanz enthält; und
- ein Verschlusselement (3), befestigt an dem zweiten Rand (8), um den Aufnahmekörper (2) zu verschliessen; **dadurch gekennzeichnet, dass** der Bodenabschnitt (6) eine schalenförmige erste Folie enthält, hergestellt aus einem ersten Material von einem Widerstand gegen das Durchstechen und Reissen, geringer als der eines zweiten Materials, welches die rohrförmige Seitenwand (5) bildet.

2. Kapsel nach Patentanspruch 1, **dadurch gekennzeichnet, dass** der Bodenabschnitt (6) einen mittleren Bereich (9) enthält, der sich quer zu der mittleren Achse erstreckt, sowie eine Verbindungswand (10), welche an den mittleren Bereich (9) angeschlossen ist, und die wenigstens eine sich parallel zu der mittleren Achse erstreckende Komponente enthält, wobei die Verbindungswand (10) an dem ersten Rand (7) an die rohrförmige Wand (5) angeschlossen ist.

3. Kapsel nach Patentanspruch 1 oder 2, **dadurch gekennzeichnet, dass** die erste Folie wenigstens eine Lage enthält, die wenigstens vorwiegend aus Aluminium besteht.

4. Kapsel nach Patentanspruch 1, 2 oder 3, **dadurch gekennzeichnet, dass** die rohrförmige Seitenwand (5) an dem ersten Rand (7) einen ersten radialen Flansch (13) enthält, der sich quer zu einer Richtung erstreckt, die durch die mittlere Achse festgelegt ist, und dadurch, dass die Verbindungswand (10) einen zweiten radialen Flansch (14) enthält, der mit dem ersten radialen Flansch (13) verbunden ist.

5. Kapsel nach Patentanspruch 4, **dadurch gekennzeichnet, dass** sich der erste Flansch (13) zu der mittleren Achse hin erstreckt.

6. Kapsel nach einem jeden der vorstehenden Patentansprüche, **dadurch gekennzeichnet, dass** die rohrförmige Seitenwand (5) an dem zweiten Rand (8) einen dritten radialen Flansch (15) enthält, der sich quer zu einer Richtung erstreckt, die durch die mittlere Achse festgelegt ist, und dadurch, dass das Verschlusselement (3) an dem dritten Flansch (15) befestigt ist.

7. Kapsel nach einem jeden der vorstehenden Patentansprüche, **dadurch gekennzeichnet, dass** die erste geformte Folie tiefgezogen ist.

8. Kapsel nach einem jeden der vorstehenden Patentansprüche, **dadurch gekennzeichnet, dass** der Bodenabschnitt (6) und die rohrförmige Seitenwand (5) auf solche Weise bemessen und/oder geformt sind, dass während des Betriebes ein oder mehrere Stechelemente (11) einer Vorrichtung (12) zur Zubereitung von Getränken, in welcher die Kapsel (1) benutzt werden soll, den Bodenabschnitt (6) durchstechen, ohne dabei die rohrförmige Seitenwand (5) zu beschädigen.

9. System zur Zubereitung von Getränken, enthaltend eine Kapsel (1) nach einem der vorstehenden Patentansprüche, sowie wenigstens eine Extraktionsvorrichtung (12), welche wiederum enthält:
- einen ersten Teil (17) enthaltend ein Gehäuse (19) für die Kapsel (1), und einen zweiten Teil (18), wobei der erste Teile (17) und der zweite Teil (18) im Verhältnis zueinander beweglich sind, und zwar zwischen einer Betriebsposition, in welcher sie eine in das Gehäuse (19) eingesetzte Kapsel (1) zwischen sich festhalten, und einer Ruheposition, in welcher sie das Einsetzen in das und Herausnehmen der Kapsel (1) aus dem Gehäuse (19) ermöglichen;
- ein oder mehrere Stechelemente (11), zugeordnet dem Gehäuse (19), um den Bodenabschnitt (6) einer Kapsel (1) zu durchstechen, die in das Gehäuse (19) eingesetzt ist, wenigstens wenn sich der erste Teil (17) und der zweite Teil (18) in der Betriebsposition befinden;
- Wasserzuführmittel, die betrieblich dem Gehäuse (19) zugeordnet sind, um während des Betriebes Wasser in die Kapsel (1) einzuleiten, und zwar durch den von einem oder mehreren Stechelementen (11) durchstochenen Bodenabschnitt (6);
- Stechmittel, dazu bestimmt, das Verschlusselement (3) zu durchstechen, wenigstens wenn die Kapsel (1) in das Gehäuse (19) eingesetzt ist, und wenn sich der erste Teil (17) und der zweite Teil (18) in der Betriebsposition befinden und der Druck in der Kammer (4) einen voreingestellten Wert überschreitet;
- wobei ausserdem, wenn die Kapsel (1) in das Gehäuse (19) eingesetzt ist und der erste Teil (17) und der zweite
- Teil (18) sich in der Betriebsposition befinden, die ein oder mehrere Stechelemente (11) durch den Bodenabschnitt (6) dringen, ohne die rohrförmige Seitenwand (5) zu beschädigen.

10. Verfahren zur Herstellung einer Kapsel zur Zubereitung von Getränken, enthaltend eine pulverförmige Lebensmittelsubstanz, welche es erlaubt, ein Getränk durch das Durchlaufen von heissem Wasser durch diese zuzubereiten, enthaltend die folgenden Schritte:
- Formen eines ersten Materials zu einer Schale, um einen Bodenabschnitt (6) zu bilden, enthaltend einen mittleren Bereich (9) und eine Verbindungswand (10), die umlaufend an den mittleren Bereich (9) angeschlossen ist und sich von dem mittleren Bereich (9) fort erstreckt;
- Verwendung eines zweiten Materials, welches einen grösseren Widerstand gegen das Durchstechen und Reissen als der des ersten Materials aufweist, um eine rohrförmige Seitenwand (5) herzustellen, die sich zwischen einem ersten Rand (7) und einem zweiten Rand (8) erstreckt und eine mittlere Achse hat;
- Herstellen eines Aufnahmekörpers (2), welcher oben offen ist und welcher in seinem Inneren eine Aufnahmekammer (4) bildet, wobei ein freier Rand der Verbindungswand (1) an dem ersten Rand (7) befestigt wird;
- Einfüllen in die Aufnahmekammer (4) einer vorgegebenen Menge der pulverförmigen Lebensmittelsubstanz; und
- Verschliessen der Kammer (4) durch Befestigung eines Verschlusselementes (3) an dem zweiten Rand (8).

11. Verfahren nach Patentanspruch 10, bei welchem das erste Material wenigstens eine Lage aus Aluminium und/oder bei welchem das zweite Material wenigstens eine Lage aus Kunststoffmaterial enthält.

12. Verfahren nach Patentanspruch 10 oder 11, bei welchem der Bodenabschnitt (6) durch das Tiefziehen der ersten Folie hergestellt ist.

## Revendications

1. Une capsule pour la préparation de boissons, contenant une substance alimentaire en poudre qui permet de réaliser une boisson par passage d'eau chaude à travers elle, la capsule (1) comprenant :
un corps-contenant en forme de coupe (2) comprenant à son tour une paroi latérale tubulaire (5) s'étendant entre un premier bord (7) et un deuxième bord (8) et une portion de fond (6) fixée au premier bord (7) et s'étendant transversalement à un axe central de la paroi latérale tubulaire (5), le corps-contenant (2) formant en son intérieur une chambre-contenant (4) qui contient la substance alimentaire en poudre ; et
un élément de fermeture (3) fixé au deuxième bord (8) pour fermer le corps-contenant (2) ;
**caractérisée en ce que** la portion de fond (6) comprend une première feuille en forme de bol réalisée dans un premier matériau ayant une résistance à la perforation et au déchirement qui est inférieure à celle d'un deuxième matériau constituant la paroi latérale tubulaire (5).

2. La capsule selon la revendication 1, **caractérisée en ce que** la portion de fond (6) comprend une zone centrale (9) s'étendant transversalement à l'axe central et une paroi de raccordement (10) qui est raccordée à la zone centrale (9) et qui comprend au moins une composante d'extension parallèle à l'axe central, la paroi de raccordement (10) étant raccordée à la paroi latérale tubulaire (5) au niveau du premier bord (7).

3. La capsule selon la revendication 1 ou 2, **caractérisée en ce que** la première feuille comprend au moins une couche réalisée au moins essentiellement en aluminium.

4. La capsule selon la revendication 1, 2 ou 3, **caractérisée en ce que** la paroi latérale tubulaire (5), au niveau du premier bord (7), comprend une première bride radiale (13) s'étendant transversalement à une direction définie par l'axe central et **en ce que** la paroi de raccordement (10) comprend une deuxième bride radiale (14) accouplée avec la première bride radiale (13).

5. La capsule selon la revendication 4, **caractérisée en ce que** la première bride (13) s'étend vers l'axe central.

6. La capsule selon l'une quelconque des revendications précédentes, **caractérisée en ce que** la paroi latérale tubulaire (5), au niveau du deuxième bord (8), comprend une troisième bride radiale (15) s'étendant transversalement à une direction définie par l'axe central et **en ce que** l'élément de fermeture (3) est fixé à la troisième bride (15).

7. La capsule selon l'une quelconque des revendications précédentes, **caractérisée en ce que** la première feuille profilée est emboutie.

8. La capsule selon l'une quelconque des revendications précédentes, **caractérisée en ce que** la portion de fond (6) et la paroi latérale tubulaire (5) sont dimensionnées et/ou profilées de manière à ce que, en utilisation, un ou plusieurs éléments de perforation (11) d'un dispositif (12) de préparation de boissons dans lequel la capsule (1) est destinée à être utilisée perforent la portion de fond (6) sans endommager la paroi latérale tubulaire (5).

9. Un système pour la préparation de boissons comprenant une capsule (1) réalisée selon l'une quelconque des revendications précédentes, et au moins un dispositif d'extraction (12) qui comprend à son tour :
une première partie (17) comprenant un logement (19) pour la capsule (1), et une deuxième partie (18), la première partie (17) et la deuxième partie (18) étant mobiles l'une par rapport à l'autre entre une position opérationnelle dans laquelle elles enserrent entre elles une capsule (1) insérée dans le logement (19), et une position de repos dans laquelle elles permettent l'insertion et l'extraction de la capsule (1) respectivement dans le et du logement (19) ;
un ou plusieurs éléments de perforation (11) associés au logement (19) pour perforer la portion de fond (6) d'une capsule (1) insérée dans le logement (19) au moins quand la première partie (17) et la deuxième partie (18) sont dans la position opérationnelle ;
des moyens d'alimentation en eau opérationnellement associés au logement (19) pour, en utilisation, alimenter de l'eau dans la capsule (1) à travers la portion de fond (6) perforée par lesdits un ou plusieurs éléments de perforation (11) ;
des moyens de perforation destinés à perforer l'élément de fermeture (3) au moins quand la capsule (1) est insérée dans le logement (19), la première partie (17) et la deuxième partie (18) sont dans la position opérationnelle et la pression dans la chambre (4) dépasse une valeur prédéfinie ;
dans lequel, de plus, quand la capsule (1) est insérée dans le logement (19) et la première partie (17) et la deuxième partie (18) sont dans la position opérationnelle, lesdits un ou plusieurs éléments de perforation (11) passent à travers la portion de fond (6) sans endommager la paroi latérale tubulaire (5).

10. Un procédé de réalisation d'une capsule pour la préparation de boissons, contenant une substance alimentaire en poudre qui permet de préparer une boisson par passage d'eau chaude à travers elle, comprenant les phases opérationnelles consistant à :
profiler un premier matériau en forme de bol pour former une portion de fond (6) comprenant une zone centrale (9) et une paroi de raccordement (10) périmétralement raccordée à la zone centrale (9) et s'étendant à l'opposé de la zone centrale (9) ;
utiliser un deuxième matériau, qui a une résistance à la perforation et au déchirement supérieure à celle du premier matériau, pour réaliser une paroi latérale tubulaire (5) s'étendant entre un premier bord (7) et un deuxième bord (8) et ayant un axe central ;
réaliser un corps-contenant (2) qui est ouvert sur le dessus et qui définit en son intérieur une chambre-contenant (4), en fixant un bord libre de la paroi de raccordement (10) au premier bord (7) ;
insérer dans la chambre-contenant (4) une quantité prédéfinie de la substance alimentaire en poudre ; et
fermer la chambre (4) en fixant un élément de fermeture (3) au deuxième bord (8).

11. Le procédé selon la revendication 10, dans lequel le premier matériau comprend au moins une couche d'aluminium et/ou dans lequel le deuxième matériau comprend au moins une couche de matière plastique.

12. Le procédé selon la revendication 10 ou 11, dans lequel la portion de fond (6) est réalisée par emboutissage de la première feuille.
